# EUROPEAN PATENT SPECIFICATION

(11) **EP 2 127 745 B1**
(45) Date of publication and mention of the grant of the patent: **10.05.2017**
(21) Application number: 08703221.5
(22) Date of filing: 15.01.2008
(51) Int. Cl.: B01J 23/745, B01D 53/86, B01D 53/94, B01J 23/89, F01N 3/10

(54) **CATALYST COMPOSITION**
KATALYSATORZUSAMMENSETZUNG
COMPOSITION DE CATALYSEUR

(30) Priority: 08.02.2007 JP 2007029653; 28.03.2007 JP 2007084543
(43) Date of publication of application: 02.12.2009
(73) Proprietor: Daihatsu Motor Co., Ltd., Ikeda-shi, Osaka 563-8651 (JP); Cataler Corporation, Shizuoka 437-1492 (JP)
(72) Inventor: TANAKA, Hirohisa, Gamo-gun Shiga 520-2593 (JP); UENISHI, Mari, Gamo-gun Shiga 520-2593 (JP); TANIGUCHI, Masashi, Gamo-gun Shiga 520-2593 (JP); IWASAKI, Ryouhei, Gamo-gun Shiga 520-2593 (JP); KIMURA, Mareo, Kakegawa-shi Shizuoka 437-1492 (JP); MATSUEDA, Satoshi, Kakegawa-shi Shizuoka 437-1492 (JP)
(74) Representative: Schwabe - Sandmair - Marx
(86) International application number: PCT/JP2008/050357
(87) International publication number: WO 2008/096575

(56) References cited:
- EP-A2- 2 000 201
- JP-A- 01 262 945
- JP-A- 04 298 236
- YOO J.S. ET AL.: 'Advanced De-SOx catalyst: Mixed solid solution spinels with cerium oxide' APPLIED CATALYSIS B: ENVIRONMENTAL vol. 1, 1992, pages 169 - 189, XP008111350

## Description

### TECHNICAL FIELD

The present invention relates to a catalyst composition used as a reaction catalyst for vapor or liquid phase.

### BACKGROUND ART

Exhaust gas discharged from internal combustion engines such as a vehicle contains hydrocarbons (HC), carbon monoxides (CO), nitrogen oxides (NOx) and the like, and exhaust gas purifying catalysts which purify these substances are known.

As such exhaust gas purifying catalyst, there have been known various catalysts which supports or transforms noble metals serving as active components on or into a solid solution in composite oxides such as cerium composite oxides, zirconium composite oxides, or perovskite-type composite oxides.

Reportedly, for example, a perovskite-type composite oxide of La_{1.00}Fe_{0.57}Co_{0.38}Pd_{0.05}O₃ suppresses grain growth and maintains high catalytic activity over a long period of time. This is because of a self-regenerative function, in which the perovskite-type composite oxide reversibly introduces or extracts Pd to or from a perovskite-type crystal structure corresponding to oxidation-reduction change of emissions, so that Pd is transformed into a solid solution in the crystal structure of the composite oxide under an oxidizing atmosphere and precipitated from the same under a reducing atmosphere (see, for example, the following Non-Patent Document 1).
Non-Patent Document 1: Y. Nishihata et al., Nature, Vol. 418, No. 6894, pp. 164-167, 11 July 2002
Non-Patent Document 2: Applied Catalysis B: Environmental, 1 (1992) 169-189 describes mixed solid solution spinels with cerium oxide.

### DISCLOSURE OF THE INVENTION

### PROBLEMS TO BE SOLVED

However, noble metal elements are generally expensive, so that in industrial production, it is necessary to minimize the use of noble metal elements as much as possible.

On the other hand, transition elements other than noble metal elements have lower catalytic activity than noble metal elements and also less durability in high temperature environments. Accordingly, there is a difficulty in using those transition elements as active components.

It is an object of the present invention to provide a catalyst composition capable of exhibiting excellent catalytic activity over a long period of time under high temperature or under oxidation-reduction change, while reducing the use of noble metal elements.

### MEANS FOR SOLVING THE PROBLEM

To achieve the above object, the present invention is to provide a catalyst composition containing a composite oxide, in which the composite oxide contains Fe which is transformed into a solid solution in the composite oxide under an oxidizing atmosphere and is precipitated from the composite oxide under a reducing atmosphere.
According to the invention, the composite oxide has a spinel-type crystal phase represented by the following general formula (3):

AO·(B_{2-y-Z}Fe_{y}Pd_{Z}O_{3-α}) (3)

(wherein A represents at least one element selected from the group consisting of alkali metals, alkaline earth metals, and rare earth elements; B represents Al; x represents 1 to 3; y represents an atomic ratio satisfying the following relation: 0 < y ≤ 1.2; z represents an atomic ratio satisfying the following relation: 0 < z ≤ 0.5; and a represents a deficient atomic ratio of oxygen atoms).

Further, it is preferable that the A is Mg.

Further, it is preferable that the x is 1.

In the catalyst composition of the present invention, the composite oxide may additionally comprise at least one type of crystal phase selected from the group consisting of a magnetoplumbite type and an alumina type crystal phase.

Further, it is preferable that the catalyst composition of the present invention is an exhaust gas purifying catalyst.

### EFFECT OF THE INVENTION

According to the catalyst composition of the present invention, since the solid solution-regeneration (self-regeneration) in which Fe is transformed into a solid solution in the composite oxide under an oxidizing atmosphere and precipitated from the same under a reducing atmosphere is efficiently repeated, a dispersion state of the Fe in the composite oxide is satisfactorily maintained. Therefore, deterioration in catalytic activity due to grain growth of the Fe can be prevented and high catalytic activity can be maintained over a long period of time.

As a result, since the Fe is an active component, when the catalyst composition of the present invention is used, the catalyst composition can exhibit excellent catalytic activity at low cost over a long period of time under high temperature or under oxidation-reduction change, while reducing the use of noble metal elements.

### BRIEF DESCRIPTION OF THE DRAWINGS

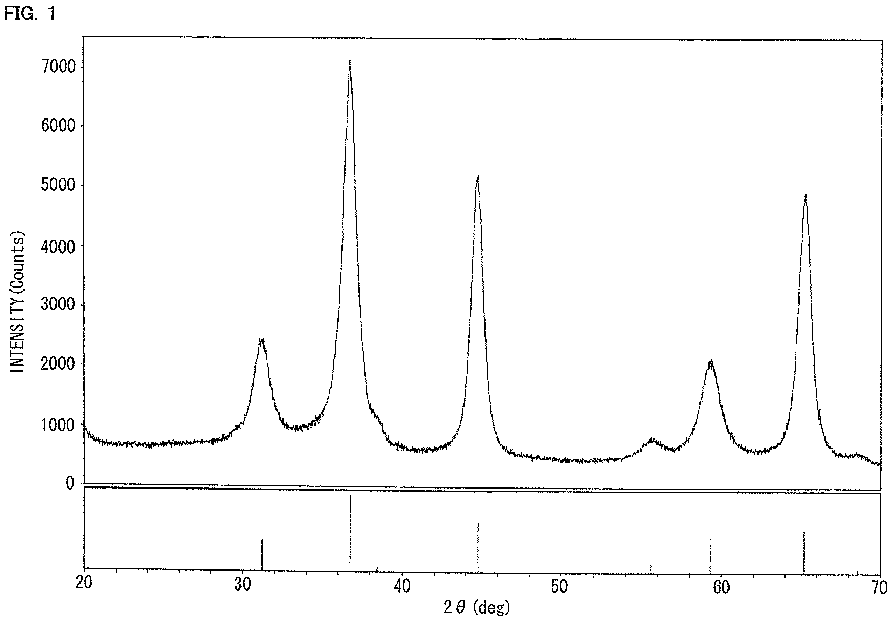

FIG. 1 is a graph illustrating X-ray diffraction data of the powder of Example 1.

### EMBODIMENT OF THE INVENTION

The composite oxide contained in the catalyst composition of the present invention contains Fe which is transformed into a solid solution in the composite oxide under an oxidizing atmosphere and precipitated from the same under a reducing atmosphere.

More specifically, the composite oxide has a spinel-type crystal phase represented by the following general formula (3):

AOx(B_{2-y-z}Fe_{y}Pd_{Z}O_{3-α}) (3)

(wherein A represents at least one element selected from the group consisting of alkali metals, alkaline earth metals, and rare earth elements; B represents Al; x represents 1 to 3; y represents an atomic ratio satisfying the following relation: 0 < y ≤ 1.2; z represents an atomic ratio satisfying the following relation: 0 < z ≤ 0.5; and a represents a deficient atomic ratio of oxygen atoms). In the above general formula (3), A, B, x, and a are defined as follows. In the above general formula (3), examples of the monovalent element represented by A include alkali metals such as Li (lithium), Na (sodium), K (potassium), Rb (rubidium), Cs (cesium) and Fr (francium).

Further, examples of the divalent element represented by A include alkaline earth metals such as Be (beryllium), Mg (magnesium), Ca (calcium), Sr (strontium), Ba (barium) and Ra (radium).

Further, examples of the rare earth elements represented by A include Sc (scandium), Y (yttrium), La (lanthanum), Ce (cerium), Pr (praseodymium), Nd (neodymium), Pm (promethium), Sm (samarium), Eu (europium), Gd (gadolinium), Tb (terbium), Dy (dysprosium), Ho (holmium), Er (erbium), Tm (thulium), Yb (ytterbium), and Lu (lutetium).

As the element represented by A, alkali metals, Li, Na, K, Mg, Ca, Sr, Ba, La, Pr, and Nd are preferable.

These elements represented by A can be used alone or in combination of two or more kinds.

In the above general formula (3), B is Al.
In the above general formula (3), x represents 1 to 3. For example, when x is 1, the composite oxide represented by the above general formula (3) has a spinel-type crystal phase serving as a primary crystal phase, in which 1 mol of oxide represented by B_{2-y-z}Fe_{y}Pd_{z}O_{3-α} is coordinated to 1 mol of oxide represented by AO.

Specifically, the composite oxide represented by the above general formula (3) has a spinel-type crystal phase serving as a primary crystal phase. That is, the composite oxide represented by the above general formula (3), in which the constituent ratios of the respective crystal phases described above are different, has a mixed phase or a single phase of these crystal phases.

In the above general formula (3), a represents a deficient atomic ratio of oxygen atoms and is represented by 0 or a positive integer. More specifically, a represents a deficient atomic ratio of oxygen atoms caused by allowing the constituent atoms on the (B+Fe) site to be deficient to the theoretical constituent ratio of the oxide represented by B_{2-y-z}Fe_{y}Pd_{Z}O_{3-α} of (B+Fe):O = 2:3. In other words, a represents an oxygen deficient amount, which is a proportion of pores produced in the crystal structure of the composite oxide represented by the above general formula (1).
y represents an atomic ratio of Fe satisfying the following relation: 0 < y ≤ 1.2. That is, Fe is an essential component, and y preferably represents an atomic ratio of Fe satisfying the following relation: 0.02 < y < 0.5. When the atomic ratio of Fe is higher than this range, the crystal structure of the composite oxide may be unstable. When it is lower than this range, the catalytic activity of Fe may fail to be sufficiently exhibited.

z represents an atomic ratio of Pd satisfying the following relation: 0 < z ≤ 0.5. That is, Pd is an essential component, and z preferably represents an atomic ratio of Pd satisfying the following relation: 0 < z < 0.2. The use of Pd in combination with Fe facilitates solid solution and precipitation of Fe during oxidation and reduction, so that the efficiency of self-regeneration of Fe can be greatly enhanced. The atomic ratio of B satisfies the relation of 2-y-z, namely, a residual atomic ratio obtained by subtracting the atomic ratios of Fe and Pd from 2.

Examples of the composite oxide represented by the above general formula (3) include MgO(Al_{1.598}Fe_{0.397}Pd_{0.015}O₃), MgO(Al_{0.9925}Fe_{0.9925}Pd_{0.015}O₃), and MgO·1.1(Al_{1.589}Fe_{0.397}Pd_{0.014}O₃).

The composite oxide of the present invention can be produced according to any suitable method for preparing a composite oxide, such as coprecipitation method, citrate complex method and alkoxide method, without particular limitation.

In the coprecipitation method, for example, an aqueous mixed salt solution containing salts (excluding noble metal salts) of the above-mentioned respective elements in a predetermined stoichiometric ratio is prepared. The aqueous mixed salt solution is coprecipitated by addition of a neutralizing agent, and the resulting coprecipitate is dried and subjected to a heat treatment.

Examples of the salts of the respective elements include inorganic salts such as sulfates, nitrates, chlorides and phosphates; and organic salts such as acetate and oxalates. The aqueous mixed salt solution can be prepared, for example, by adding the salts of the respective elements to water so as to establish the predetermined stoichiometric ratio and mixing them with stirring.

Then, the aqueous mixed salt solution is coprecipitated by adding the neutralizing agent thereto. Examples of the neutralizing agent include ammonia; organic bases including amines such as triethylamine and pyridine; and inorganic bases such as sodium hydroxide, potassium hydroxide, sodium carbonate, potassium carbonate and ammonium carbonate. The neutralizing agent is added so that the solution after the addition of the neutralizing agent has a pH of about 6 to 10.

The resulting coprecipitate is washed with water as required, for example, dried by vacuum drying or forced-air drying, and then subjected to a heat treatment (primary baking), for example, at a temperature of 500 to 1000°C, or preferably 600 to 950°C to give a primary composite oxide.

Subsequently, an aqueous noble metal salt solution is added to the resulting primary composite oxide to prepare a precursor composition. The resulting precursor composition is dried by, for example, vacuum drying or forced-air drying, and thereafter, subjected to a heat treatment (secondary baking), for example, at a temperature of 500 to 1400°C, or preferably 800 to 1200°C to give the composite oxide of the present invention.

Examples of the noble metal salt include the same salts as those described above and can be prepared in the same manner as above. Practically, aqueous nitrate solution, dinitrodiammine nitrate solution or aqueous chloride solution is used. More specific examples thereof include palladium salt solutions such as aqueous palladium nitrate solution, dinitrodiammine palladium nitrate solution and palladium tetraammine nitrate solution.

In the above method, an aqueous solution (containing noble metal(s)) of all the constituent elements is prepared. The aqueous solution thus prepared is coprecipitated by addition of a neutralizing agent, and the resulting coprecipitate is dried and subjected to a heat treatment.

In the citrate complex method, for example, an aqueous citric acid mixed salt solution is prepared by adding citric acid and the salts of the respective elements (excluding noble metal salts) to an aqueous solution so that an amount of the citric acid slightly exceeds an amount of the salts thereof (excluding noble metal salts) corresponding to the stoichiometric ratio with respect to the above-mentioned respective elements, The aqueous citric acid mixed salt solution is evaporated to dryness to form citrate complex of the above-mentioned respective elements (excluding noble metal salts). The resulting citrate complex is provisionally baked and then subjected to a heat treatment.

Examples of the salts of the respective elements include the same salts as described above, and the aqueous citric acid mixed salt solution can be prepared, for example, by preparing an aqueous mixed salt solution in the same manner as above and then adding an aqueous solution of citric acid to the aqueous mixed salt solution.

Thereafter, the aqueous citric acid mixed salt solution is evaporated to dryness to form a citrate complex of the above-mentioned respective elements. The evaporation to dryness is carried out to remove moisture at a temperature at which the formed citrate complex is not decomposed, for example, at room temperature to about 150°C. Thus, the citrate complex of the above-mentioned respective elements (excluding noble metal salts) can be formed. Thereafter, the formed citrate complex is provisionally baked. The provisional baking is carried out by heating at a temperature of 250 to 350°C, for example, in vacuum or in an inert atmosphere.

The baked citrate complex is subjected to a heat treatment (primary baking), for example, at a temperature of 500 to 1200°C, or preferably 600 to 1000°C to give a primary composite oxide.

Subsequently, in the same manner as the coprecipitation method, an aqueous noble metal salt solution is added to the resulting primary composite oxide to prepare a precursor composition. The resulting precursor composition is dried by, for example, vacuum drying or forced-air drying, and thereafter, subjected to a heat treatment (secondary baking), for example, at a temperature of 500 to 1400°C, or preferably 800 to 1200°C to give the composite oxide of the present invention.

In the alkoxide method, an alkoxide mixed solution containing alkoxides of the respective elements (excluding noble metals) in the above-mentioned stoichiometric ratio is prepared. The alkoxide mixed solution is hydrolyzed by adding water thereto, to give a precipitate.

Examples of the alkoxides of the respective elements include mono-, di-, or tri-alcoholates each comprising the respective elements and an alkoxy such as methoxy, ethoxy, propoxy, isopropoxy or butoxy; and mono-, di-, or tri-alkoxyalcoholates of the respective elements represented by the following general formula (4).

E[OCH(R₁)-(CH₂)ᵢ-OR₂]ⱼ (4)

(wherein E represents each of the elements, R1 represents a hydrogen atom or an alkyl group having 1 to 4 carbon atoms, R2 represents an alkyl group having 1 to 4 carbon atoms, i represents an integer of 1 to 3, and j represents an integer of 2 to 4).

More specific examples of the alkoxyalcoholates include methoxyethylate, methoxypropylate, methoxybutylate, ethoxyethylate, ethoxypropylate, propoxyethylate and butoxyethylate.

The alkoxide mixed solution can be prepared, for example, by adding the alkoxides of the respective elements to an organic solvent in such proportions so as to establish the above-mentioned stoichiometric ratio and mixing them with stirring.

The organic solvent is not particularly limited as long as it can dissolve the alkoxides of the respective elements, and examples thereof include aromatic hydrocarbons, aliphatic hydrocarbons, alcohols, ketones and esters. Among them, aromatic hydrocarbons such as benzene, toluene and xylene are preferable.

The resulting precipitate is evaporated to dryness and the dried precipitate is then dried, for example, by vacuum drying or forced-air drying, and is thereafter subjected to a heat treatment (primary baking), for example, at a temperature of 500 to 1000°C, or preferably 600 to 950°C to give a primary composite oxide.

Subsequently, in the same manner as the coprecipitation method, an aqueous noble metal salt solution is added to the resulting primary composite oxide to prepare a precursor composition. The resulting precursor composition is dried by, for example, vacuum drying or forced-air drying, and thereafter, subjected to a heat treatment (secondary baking), for example, at a temperature of 500 to 1400°C, or preferably 800 to 1200°C to give the composite oxide of the present invention.

In the alkoxide method, when the composite oxide contains a noble metal element, for example, a homogeneously mixed solution containing an alkoxide mixed solution and an organometallic salt of the noble metal at a given stoichiometric ratio is prepared, and water is added thereto to precipitate. Thereafter, the resulting precipitate is dried and subjected to a heat treatment to give the composite oxide of the present invention.

Examples of the organometallic salt of the noble metal include carboxylates of the noble metals derived from, for example, acetates and propionates; metal chelate complexes of the noble metals derived from β-diketone compounds or β-ketoester compounds represented by the following general formula (5), and/or β-dicarboxylic acid ester compounds represented by the following general formula (6).

R₃COCHR₅COR₄ (5)

(wherein R3 represents an alkyl group having 1 to 6 carbon atoms, a fluoroalkyl group having 1 to 6 carbon atoms, or an aryl group, R4 represents an alkyl group having 1 to 6 carbon atoms, a fluoro alkyl group having 1 to 6 carbon atoms, an aryl group, or an alkoxy group having 1 to 4 carbon atoms, and R5 represents a hydrogen atom or an alkyl group having 1 to 4 carbon atoms).

R₇CH(COR₆)₂ (6)

(wherein R6 represents an alkyl group having 1 to 6 carbon atoms, and R7 represents a hydrogen atom or an alkyl group having 1 to 4 carbon atoms).

In the above general formulae (5) and (6), examples of the alkyl group having 1 to 6 carbon atoms of R3, R4, and R6 include methyl, ethyl, propyl, isopropyl, n-butyl, s-butyl, t-butyl, t-amyl, and t-hexyl. Further, examples of the alkyl group having 1 to 4 carbon atoms of R5 and R7 include methyl, ethyl, propyl, isopropyl, n-butyl, s-butyl, and t-butyl.

In the above general formula (5), examples of the fluoroalkyl groups having 1 to 6 carbon atoms of R3 and R4 include trifluoromethyl. Further, examples of the aryl groups of R3 and R4 include phenyl. Further, examples of the alkoxy group having 1 to 4 carbon atoms of R3 include methoxy, ethoxy, propoxy, isopropoxy, n-butoxy, s-butoxy, and t-butoxy.

More specific examples of the β-diketone compound include 2,4-pentanedione, 2,4-hexanedione, 2,2-dimethyl-3,5-hexanedione, 1-phenyl-1,3-butanedione, 1-trifluoromethyl-1,3-butanedione, hexafluoro acetylacetone, 1,3-diphenyl-1,3-propanedione, and dipivaloyl methane.

More specific examples of the β-ketoester compound include methylacetoacetate, ethylacetoacetate, and t-butylacetoacetate.

More specific examples of the β-dicarboxylic acid ester compound include dimethyl malonate and diethyl malonate.

The composite oxide of the present invention thus obtained can be used intact as a catalyst composition, but is generally prepared as a catalyst composition by a known method such as being supported on a catalyst carrier.

Examples of the catalyst carrier include known catalyst carriers such as honeycomb monolith carriers made of cordierites. The composite oxide is supported on the catalyst carrier, for example, first by adding water to the composite oxide obtained in the above manner to form a slurry, then applying the slurry to the catalyst carrier, drying the applied slurry, and thereafter subjecting it to a heat treatment at a temperature of 300 to 800°C, or preferably 300 to 600°C.

In the catalyst composition of the present invention, which contains the composite oxides represented by the general formula (3), Fe is coordinated in a crystal structure of the composite oxide, and the coordinated Fe is precipitated from the crystal structure under a reducing atmosphere, or transformed into a solid solution in the crystal structure under an oxidizing atmosphere. Thus, by a self-regenerative function capable of repeating formation of solid solution under an oxidizing atmosphere and precipitation under a reducing atmosphere, grain growth of Fe is effectively suppressed and a dispersion state thereof in the composite oxide can be maintained even in long term use.

As a result, since Fe is an active component, the use of the catalyst composition of the present invention, which contains the composite oxides represented by the general formula (3), can exhibit excellent catalytic activity at low cost over a long period of time under high temperature or under oxidation-reduction change, while reducing the use of noble metal elements.

Therefore, the catalyst composition of the present invention can be widely used as a reaction catalyst for vapor or liquid phase. In particular, the catalyst composition can realize excellent exhaust gas purifying properties over a long period of time, and therefore, the catalyst composition can be suitably used as an exhaust gas purifying catalyst which is used for purifying exhaust gas discharged from internal combustion engines such as gasoline engine and diesel engine, and boilers.

### EXAMPLES

While in the following, the present invention is described in further detail with reference to Examples and Comparative Example, the present invention is not limited to any of them by no means.

### Example 1 (not according to the invention)

Magnesium nitrate 0.100 mol in terms of Mg
Aluminum nitrate 0.196 mol in terms of Al
Iron nitrate 0.004 mol in terms of Fe

An aqueous mixed salt solution was prepared by charging the above components in a 500-mL round-bottomed flask, adding 100 mL of deionized water thereto, and dissolving the mixture with stirring. Next, the aqueous mixed solution thus prepared was gradually added dropwise to an aqueous alkaline solution (neutralizing agent) which was prepared by dissolving 25.0 g of sodium carbonate in 200g of deionized water, to give a coprecipitate. After the coprecipitate was washed with water and then filtered, vacuum drying was performed at 80°C. Subsequently, the resulting product was subjected to a heat treatment at 800°C for 1 hour, to give a powder of a composite oxide made of MgO(Al_{1.96}Fe_{0.04}O₃).

The result of X-ray diffraction confirmed that this powder had a spinel structure. The X-ray diffraction data is shown in FIG. 1.

### Example 2 (not according to the invention)

Magnesium nitrate 0.100 mol in terms of Mg
Aluminum nitrate 0.160 mol in terms of Al
Iron nitrate 0.040 mol in terms of Fe

A powder of a composite oxide made of MgO(Al_{1.60}Fe_{0.40}O₃) was obtained in the same manner as in Example 1 except that the above-mentioned components are used.

### Example 3 (not according to the invention)

Magnesium nitrate 0.100 mol in terms of Mg
Aluminum nitrate 0.100 mol in terms of Al
Iron nitrate 0.100 mol in terms of Fe

A powder of a composite oxide made of MgO(Al_{1.00}Fe_{1.00}O₃) was obtained in the same manner as in Example 1 except that the above components are used and the heat treatment was conducted at 1000°C for 1 hour.

### Example 4

Magnesium nitrate 0.1000 mol in terms of Mg
Aluminum nitrate 0.1588 mol in terms of Al
Iron nitrate 0.0397 mol in terms of Fe

An aqueous mixed salt solution was prepared by charging the above components in a 500-mL round-bottomed flask, adding 100 mL of deionized water thereto, and dissolving the mixture with stirring. Next, the aqueous mixed solution thus prepared was gradually added dropwise to an aqueous alkaline solution (neutralizing agent) which was prepared by dissolving 25.0 g of sodium carbonate in 200g of deionized water, to give a coprecipitate. After the coprecipitate was washed with water and then filtered, vacuum drying was performed at 80°C. Subsequently, the resulting product was subjected to a heat treatment (primary baking) at 800°C for 1 hour, to give a primary composite oxide.

An aqueous palladium nitrate solution (equivalent to 0.0015 mol of Pd) was added to the primary composite oxide, mixed with stirring and impregnated for 1 hour, to give a precursor composition.

The precursor composition was dried at 100°C for 2 hours, and then subjected to a heat treatment (secondary baking) at 1000°C for 1 hour, to give a powder of a heat-resistant oxide having a structure of MgO(Al_{1.588}Fe_{0.397}Pd_{0.015}O₃).

### Example 5

Magnesium nitrate 0.1000 mol in terms of Mg
Aluminum nitrate 0.09925 mol in terms of Al
Iron nitrate 0.09925 mol in terms of Fe

A primary composite oxide was obtained in the same manner as in Example 4 using the above components.

An aqueous palladium nitrate solution (equivalent to 0.0015 mol of Pd) was added to the primary composite oxide, mixed with stirring and impregnated for 1 hour, to give a precursor composition.

The precursor composition was dried at 100°C for 2 hours, and then subjected to a heat treatment (secondary baking) at 1000°C for 1 hour, to give a powder of a heat-resistant oxide having a structure of MgO(Al_{0.9925}Fe_{0.9925}Pd_{0.015}O₃).

### Example 6 (not according to the invention)

Magnesium nitrate 0.100 mol in terms of Mg
Aluminum nitrate 0.110 mol in terms of Al
Iron nitrate 0.110 mol in terms of Fe

A powder of a composite oxide made of MgO·1.1(Al_{1.00} Fe_{1.00} O₃) was obtained in the same manner as in Example 1 except that the above components are used and the heat treatment was conducted at 1000°C for 1 hour.

### Example 7 (not according to the invention)

Magnesium nitrate 0.100 mol in terms of Mg
Aluminum nitrate 0.125 mol in terms of Al
Iron nitrate 0.125 mol in terms of Fe

A powder of a composite oxide made of Mg4·1.25(Al_{1.00} Fe_{1.00}O₃) was obtained in the same manner as in Example 1 except that the above components are used and the heat treatment was conducted at 1000°C for 1 hour.

### Example 8 (not according to the invention)

Magnesium nitrate 0.100 mol in terms of Mg
Aluminum nitrate 0.150 mol in terms of Al
Iron nitrate 0.150 mol in terms of Fe

A powder of a composite oxide made of MgO·1.5(Al₁.₀₀Fe_{1.00}O₃) was obtained in the same manner as in Example 1 except that the above components are used and the heat treatment was conducted at 1000°C for 1 hour.

### Example 9 (not according to the invention)

Magnesium nitrate 0.100 mol in terms of Mg
Aluminum nitrate 0.600 mol in terms of Al
Iron nitrate 0.600 mol in terms of Fe

A powder of a composite oxide made of MgO·6(Al_{1.00}Fe_{1.00}O₃) was obtained in the same manner as in Example 1 except that the above components are used and the heat treatment was conducted at 1000°C for 1 hour.

### Example 10 (not according to the invention)

Magnesium nitrate 0.100 mol in terms of Mg
Aluminum nitrate 0.900 mol in terms of Al
Iron nitrate 0.900 mol in terms of Fe

A powder of a composite oxide made of MgO·9(Al_{1.00}Fe_{1.00}O₃) was obtained in the same manner as in Example 1 except that the above components are used and the heat treatment was conducted at 1000°C for 1 hour.

### Example 11

Magnesium nitrate 0.10000 mol in terms of Mg
Aluminum nitrate 0.17479 mol in terms of Al
Iron nitrate 0.04367 mol in terms of Fe

A primary composite oxide was obtained in the same manner as in Example 4 using the above components.

An aqueous palladium nitrate solution (equivalent to 0.0014 mol of Pd) was added to the primary composite oxide, mixed with stirring and impregnated for 1 hour, to give a precursor composition.

The precursor composition was dried at 100°C for 2 hours, and then subjected to a heat treatment (secondary baking) at 800°C for 1 hour, to give a powder of a heat-resistant oxide having a structure of MgO·1.1(Al_{1.589}Fe_{0.397}Pd_{0.014}O₃).

### Comparative Example 1

Magnesium nitrate 0.1000 mol in terms of Mg
Aluminum nitrate 0.1985 mol in terms of Al

A primary composite oxide was obtained in the same manner as in Example 4 using the above components.

An aqueous palladium nitrate solution (equivalent to 0.0015 mol of Pd) was added to the primary composite oxide, mixed with stirring and impregnated for 1 hour, to give a precursor composition.

The precursor composition was dried at 100°C for 2 hours, and then subjected to a heat treatment (secondary baking) at 1000°C for 1 hour, to give a powder of a heat-resistant oxide having a structure of MgO(Al_{1.985}SPd_{0.015}O₃).

### Test Example 1 Activity Evaluation

### 1) Endurance Test

One cycle was set as follows: exposure to an inert atmosphere for 5 minutes, exposure to an oxidizing atmosphere for 10 minutes, exposure to an inert atmosphere for 5 minutes and exposure to a reducing atmosphere for 10 minutes (30 minutes in total), and this cycle was repeated 10 times for 5 hours in total. In accordance with the above test, the powder obtained in each of Examples and Comparative Example was alternately exposed to an oxidizing atmosphere and a reducing atmosphere, and then cooled to room temperature while maintaining in the reducing atmosphere.

The inert atmosphere, the oxidizing atmosphere and the reducing atmosphere correspond to an exhaust gas atmosphere discharged when burning a mixed air in the stoichiometric state, the lean state, and the rich state, respectively.

Each of the atmospheres was prepared by supplying the gas of the composition shown in Table 2 containing high temperature steam at a flow rate of 300 x 10⁻³ m³/hr. The atmospheric temperature was maintained to approximately 1000°C.

### 2) Purifying Rate at 400°C

Each of the powders after the endurance test was molded into a pellet having a size in the range of 0.5 mm to 1.0 mm, to prepare a test sample. Each of the purifying rates of CO, HC, and NOx at 400°C was measured using the model gas composition shown in Table 3. In the measurement, each of the samples of Examples 1 to 3 and Examples 6 to 10 weighted 1.0 g and each of the samples of Examples 4, 5, and 11 and Comparative Example 1 weighed 0.4 g. The flow rate was taken as 2.5 L/min. The results are shown in Table 1.

### Test Example 2 Rate of Solid Solution

Each of the powders obtained in Examples (excluding Example 3 and Examples 6 to 10) was subjected to an oxidation treatment (a heat treatment in the atmosphere at 800°C for 1 hour), then a reduction treatment (a heat treatment in N₂ gas containing 10% H₂, at 800°C for 1 hour), and furthermore, a reoxidation treatment (a heat treatment in the atmosphere at 800°C for 1 hour).

After each of the oxidation treatment, the reduction treatment, and the reoxidation treatment, an XAFS near the Fe-K absorption edge of each of the powders was measured. As for the XANES data resulted from the XAFS measurement, using a standard sample which contains an Fe foil and an oxide of a spinel type material without containing noble metals, the rate of solid solution (%) of Fe after each treatment was estimated by superposing both the respective sample data and the standard sample data. The results are shown in Table 1. Further, a precipitation rate of Fe during the reduction was calculated by subtracting the rate of solid solution after the reduction treatment from the rate of solid solution after the oxidation treatment. The results are shown in Table 1.

**[Table 1]**

| [TABLE 1] | | | | | | | | | |
|---|---|---|---|---|---|---|---|---|---|
| Ex./Comp. Ex. | Composition | 400°C Purifying Rate (%) | | | | Rate of Fe Solid Solution (%) | | | Fe Precipitation Rate During Reduction (Oxidation-Reduction) |
| | | Weight of Sample (g) | HC | Nox | CO. | Oxidation | Reduction | Reoxidation | |
| Ex. 1 * | MgO(Al_{1.96}Fe_{0.04}O₃) | 1.0 | 41.3 | 7.9 | 20.3 | 100 | 84.2 | 99.0 | 15.8 |
| Ex 2* | MgO(Al_{1.60}Fe_{0.40}O3) | 1.0 | 61.2 | 11.7 | 49.4 | 100 | 79.6 | 99.3 | 20.4 |
| Ex.3* | MgO(Al_{1.00}Fe_{1.00}O₃) | 1.0 | 51.3 | 5.9 | 35.9 | - | - | - | - |
| Ex.4 | MgO(Al_{1.588}Fe_{0.397}Pd_{0.15}O₃) | 0.4 | 53.5 | 59.1 | 56.3 | 89.5 | 50.6 | 94.6 | 38.9 |
| Ex. 5 | MgO(Al_{0.9925}Fe_{0.9925}Pd_{0.015}O₃) | 0.4 | 56.2 | 64.6 | 58.7 | 92.6 | 53.2 | 100 | 39.4 |
| Ex. 6* | MgO·1.1(Al_{1.00}Fe_{1.00}O₃) | 1.0 | 55.1 | 10.2 | 40.3 | - | - | - | - |
| Ex 7 * | MgO·1.25(Al_{1.00}Fe_{1.00}O₃) | 1.0 | 60.5 | 12.3 | 42.1 | - | - | - | - |
| Ex.8* | MgO-1.5(Al_{1.00}Fe_{1.00}O₃) | 1.0 | 50.7 | 9.0 | 35.8 | - | - | - | - |
| Ex. 9 * | MgO-6(Al_{1.00}Fe_{1.00}O₃) | 1.0 | 51.0 | 8.0 | 35.1 | - | - | - | - |
| Ex. 10* | MgO-9(Al_{1.00}Fe_{1.00}O₃) | 1.0 | 51.2 | 8.5 | 37.3 | - | - | - | - |
| Ex. 11 | MgO-1.1(Al_{1.589}Fe_{0.397}Pd_{0.014}O₃) | 0.4 | 55.7 | 62.4 | 65.0 | 90.2 | 50.6 | 94.6 | 39.6 |
| Comp. Ex. 1 | MgO(Al_{1.985}Pd_{0.015}O₃) | 0.4 | 7.7 | 2.5 | 17.5 | - | - | - | - |

| | | | | | | | | | |
|---|---|---|---|---|---|---|---|---|---|
| *= not according to the present invention | | | | | | | | | |

**[Table 2]**

| [TABLE 2] | | | |
|---|---|---|---|
| | Oxidizing Atmosphere (vol%) | Inert Atmosphere (vol%) | Reducing Atmosphere (vol%) |
| H₂ | - | - | 0.5 |
| CO | - | - | 1.5 |
| O₂ | 1.0 | - | - |
| CO₂ | 8.0 | 8.0 | 8.0 |
| H₂O | 10 | 10 | 10 |
| N₂ | 81 | 82 | 80 |

**[Table 3]**

| [TABLE 3] | | | | | | | |
|---|---|---|---|---|---|---|---|
| Gas | CO | H₂ | C₃H₆ | C₃H₈ | O₂ | NOx | CO₂ |
| Concentration (ppm) | 7000 | 2333 | 500 | 133 | 6700 | 1700 | 80000 |

### INDUSTRIAL APPLICABILITY

As described above, the catalyst composition of the present invention can be widely used as a reaction catalyst for vapor or liquid phase. In particular, the catalyst composition can realize excellent exhaust gas purifying properties over a long period of time, and therefore, the catalyst composition is suitably used as an exhaust gas purifying catalyst which is used for purifying exhaust gas discharged from internal combustion engines such as gasoline engine and diesel engine, and boilers.

## Claims

1. A catalyst composition comprising a composite oxide,
wherein the composite oxide comprises Fe which is transformed into a solid solution in the composite oxide under an oxidizing atmosphere and is precipitated from the composite oxide under a reducing atmosphere, and
has a spinel-type crystal phase represented by the following general formula (3):
AO·x (B_{2-y-z}Fe_{y}Pd_{z}O_{3-α}) (3)
(wherein A represents at least one element selected from the group consisting of alkali metals, alkaline earth metals, and rare earth elements; B represents Al; x represents 1 to 3; y represents an atomic ratio satisfying the following relation: 0 < y ≤ 1.2; z represents an atomic ratio satisfying the following relation: 0 < z ≤ 0.5; and a represents a deficient atomic ratio of oxygen atoms).

2. The catalyst composition according to claim 1, wherein the A is Mg.

3. The catalyst composition according to claim 1, wherein the x is 1.

4. The catalyst composition according to claim 1, which is an exhaust gas purifying catalyst.

## Patentansprüche

1. Katalysatorzusammensetzung, umfassend ein Kompositoxid,
wobei das Kompositoxid Fe umfasst, welches in eine feste Lösung in dem Kompositoxid unter einer oxidierenden Atmosphäre umgewandelt wird und von dem Kompositoxid unter einer reduzierenden Atmosphäre präzipitiert wird, und
eine Kristallphase vom Spinell-Typ, dargestellt durch die folgende allgemeine Formel (3), aufweist:
AO·x (B_{2-y-z}Fe_{y}Pd_{z}O_{3-α}) (3)
(wobei A für mindestens ein Element, das aus der Gruppe ausgewählt ist, welche aus Alkalimetallen, Erdalkalimetallen und Seltenerdelementen besteht, steht; B für A1 steht; x für 1 bis 3 steht; y für ein Atomverhältnis, das die folgende Relation erfüllt, steht: 0 < y ≤ 1,2; z für ein Atomverhältnis, das die folgende Relation erfüllt, steht: 0 < z ≤ 0,5; und a für ein Atommangelverhältnis von Sauerstoffatomen steht).

2. Katalysatorzusammensetzung gemäß Anspruch 1, wobei das A Mg ist.

3. Katalysatorzusammensetzung gemäß Anspruch 1, wobei das x 1 ist.

4. Katalysatorzusammensetzung gemäß Anspruch 1, welche ein Abgasreinigungskatalysator ist.

## Revendications

1. Une composition de catalyseur comprenant un oxyde composite, dans laquelle l'oxyde composite comprend du Fe, qui est transformé en une solution solide dans l'oxyde composite sous une atmosphère oxydante et est précipité de l'oxyde composite sous une atmosphère réductrice, et qui a une phase cristalline de type spinelle représentée par la formule générale suivante (3)
AO·x (B_{2-y-z}Fe_{y}Pd_{z}O_{3-α}) (3)
(dans laquelle A représente au moins un élément choisi parmi le groupe se composant de métaux alcalins, de métaux alcalinoterreux et d'éléments de terres rares ; B désigne Al ; x est égal à 1 à 3 ; y représente un rapport atomique satisfaisant à la relation suivante : 0 < y ≤ 1,2 ; z désigne un rapport atomique satisfaisant à la relation suivante : 0 < z ≤ 0,5 ; et α correspond à un rapport atomique d'atomes d'oxygène déficitaire).

2. La composition de catalyseur selon la revendication 1, dans laquelle le A est Mg.

3. La composition de catalyseur selon la revendication 1, dans laquelle le x est 1.

4. La composition de catalyseur selon la revendication 1, qui est un catalyseur de purification de gaz d'échappement.
